(19) Europäisches Patentamt / European Patent Office / Office européen des brevets

(11) **EP 2 440 717 B1**

(12) **EUROPEAN PATENT SPECIFICATION**

(45) Date of publication and mention
of the grant of the patent:
**05.07.2017 Bulletin 2017/27**

(21) Application number: **10725164.7**

(22) Date of filing: **14.06.2010**

(51) Int Cl.:
**E04C 5/01** *(2006.01)*

(86) International application number:
**PCT/EP2010/058292**

(87) International publication number:
**WO 2010/142807 (16.12.2010 Gazette 2010/50)**

(54) **High elongation fibres for conventional concrete**

Stahlfaser mit hoher Dehnfähigkeit für herkömmlichen Beton

Fibres d'acier d'élongation élevée pour béton courant classique

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **12.06.2009 EP 09162570**

(43) Date of publication of application:
**18.04.2012 Bulletin 2012/16**

(73) Proprietor: **NV Bekaert SA**
**8550 Zwevegem (BE)**

(72) Inventor: **LAMBRECHTS, Ann**
**B-8580 Avelgem (BE)**

(74) Representative: **Messely, Marc et al**
**NV Bekaert SA**
**IPD 6030**
**Bekaertstraat 2**
**8550 Zwevegem (BE)**

(56) References cited:
EP-A- 0 851 957      WO-A-99/55980
US-A- 4 883 713      US-B1- 6 235 108

- **VERBAND DEUTSCHER STAHLFASERHERSTELLER E V: "Stahlfaserbeton - Stahlfasertypen" 20060623, 23 June 2006 (2006-06-23), pages 1-5, XP007910396**
- **José Manuel De Sena Cruz: "Comportamento Ciclico de Estruturas Porticadas de Betão Armado Reforcado com Fibras de Aco", , 1 July 1998 (1998-07-01), XP055184379, Porto Retrieved from the Internet: URL:http://www.civil.uminho.pt/composites/Publications/1999/MSc1998_001_JSenaCruz.pdf [retrieved on 2015-04-20]**

Remarks:
The file contains technical information submitted after the application was filed and not included in this specification

## Description

## Technical Field

This invention relates to a concrete structure of conventional concrete reinforced with a new type of steel fibres. The steel fibres are characterized by a high elongation.

## Background Art

It is well-known to reinforce concrete or mortar with steel fibres to improve the quality of the concrete or mortar. Steel fibres are for example used to reinforce conventional concrete.

The term "conventional concrete" refers to a concrete having a compression strength lower than 75 MPa (1 MPa = 1 Mega-Pascal = 1 Newton/mm$^2$), e.g. lower than 70 MPa, and preferably lower than 60 MPa.

EP-B1 -0851957 (NV Bekaert SA) discloses a concrete structure of conventional concrete according to the preamble of claim 1 and a steel fibre with flattened hook-shaped ends, whereby the post-crack bending strength of the concrete, reinforced by means of such fibres, is highly improved.

US-A-4883713 (Eurosteel) teaches a steel fibre comprising a cylindrical steel body having conically shaped ends for improving the anchoring feature of the steel fibre into the steel fibre reinforced concrete.

These two cited documents, as well as other documents, already teach that the properties of conventional steel fibre concrete can be highly improved thanks to the improved anchoring features of the steel fibres into the concrete.

Currently the known prior art steel fibres for concrete reinforcement function very well for improving the service-ability limit state (SLS) of a concrete structure, i.e. they bridge very well the cracks or crack mouth opening displacements (CMOD) lower than or equal to 0.5 mm, e.g. CMOD's ranging between 0.1 mm and 0.3 mm, during a typical three point bending test - for the test see European Standard EN 14651 - Test method for metallic fibred concrete, measuring the flexural tensile strength. In other words, known steel fibres like steel fibres with flattened hook-shaped ends and fibres having conically shaped ends function well for limiting the width or growth of cracks up to about 0.5 mm (SLS). The disadvantage today with these fibres is their relatively low performance at ultimate state (ULS). Especially, the ratio between ultimate limit state (ULS) and service-ability limit state (SLS) post-crack strength is relatively low. This ratio is determined by the load value $F_{R,1}$ (CMOD = 0.5 mm) and $F_{R,4}$ (CMOD = 3.5 mm).

Some prior art fibres do not perform at ULS as they break at CMOD lower than what is required for ULS. Other fibres, like fibres with hook shaped ends are designed to be pulled-out. Due to the pull-out, those fibres show a displacement-softening behaviour already for small displacements.

In spite of this low performance at ULS, presently known steel fibres may also be used in so-called structural applications in order to improve the ultimate limit state (ULS). Here the known steel fibres are expected to bear or carry load, instead of or in addition to classical reinforcement, such as rebar, mesh, pre-stressing, and post-tensioning. In order to be effective in such load carrying function, however, these present steel fibres have to be used in huge dosages considerably exceeding normal dosages of 20 kg/m$^3$ to 40 kg/m$^3$. The huge dosages can cause workability problems such as the mixing and placing problems.

## Disclosure of Invention

It is an object of the present invention to provide a concrete structure of conventional concrete reinforced with a new type of steel fibres able to fulfil a new function once embedded in conventional concrete.

It is an object of the present invention to provide a concrete structure with a new type of steel fibre, which is capable of bridging permanently the crack mouth opening displacements greater than 0.5 mm during the three point bending test according to the European Standard EN 14651 (June 2005).

It is another object of the present invention to provide a concrete structure with a new type of steel fibres which are taking loads in structural applications without requiring high dosages.

According to the present invention a concrete structure of conventional concrete according to claim 1 comprising steel fibres is provided. The steel fibre has a middle portion and two ends, i.e. a first end at one side of the middle portion and a second end at the other end of the middle portion.

The steel fibre has a diameter ranging from 0.4 mm to 1.20 mm and a length to diameter ratio L/D ranging from 40 to 100. The two ends are anchorage ends for anchoring the steel fibre in concrete. The anchorage ends are selected from the group consisting of enlarged ends that are conically formed, cold headed ends, bent ends, undulated ends or any combination thereof.

The middle portion has a tensile strength $R_m$ (in MPa) of at least 1000 MPa.

Furthermore the steel fibre according to the present invention and more particularly the middle portion of the steel fibre according to the present invention has an elongation at maximum load $A_{g+e}$ that is at least 4 %.

ELONGATION AT MAXIMUM LOAD

Within the context of the present invention, the elongation at maximum load $A_{g+e}$ and not the elongation at fracture At is used to characterise the elongation of a steel fibre, more particularly of the middle portion of a steel fibre. The reason is that once the maximum load has been reached, constriction of the available surface of the steel fibre starts and higher loads are not taken up.

The elongation at maximum load $A_{g+e}$ is the sum of the plastic elongation at maximum load Ag and the elastic elongation. The elongation at maximum load does not comprise the structural elongation As which may be due to the wavy character of the middle portion of the steel fibre (if any). In case of a wavy steel fibre, the steel fibre is first straightened before the $A_{g+e}$ is measured.

The elongation at maximum load $A_{g+e}$ of the middle portion of a steel fibre according to the present invention is at least 4%.

According to particular embodiments of the present invention, the middle portion of the steel fibre has an elongation at maximum load $A_{g+e}$ higher than 4.25 %, higher than 4.5 %, higher than 4.75 %, higher than 5.0 %, higher than 5.25 %, higher than 5.5 %, higher than 5.75 % or even higher than 6.0%.

The high degree of elongation at maximum load $A_{g+e}$ may be obtained by applying a particular stress-relieving treatment such as a thermal treatment to the steel wires where the steel fibres will be made of.

Conventional steel fibres are made from wire with relatively small elongation at maximum load $A_{g+e}$ (elongation at maximum load $A_{g+e}$ of max. 2%). Thus conventional steel fibres in conventional concrete are designed to be pulled-out of the matrix (fibres with hook shaped ends). Other steel fibres known in the art do not perform at ULS as they break at CMOD lower than what is required for ULS. Examples of such steel fibres are steel fibres with conically shaped ends.

Fibres within this invention elongate due to the steel wire with high elongation at maximum load $A_{g+e}$. They elongate and do not break before reaching ULS. Furthermore as the fibres within the present invention have a high tensile strength concrete reinforced with this type of steel fibres may withstand high loads.

The high elongation values of the wire at maximum load must allow to bridge the crack mouth opening displacements greater than 0.5 mm and must allow to take up loads instead of traditional reinforcement or in addition to traditional reinforcement at normal levels of dosage. So the new type of steel fibre improves the ultimate limit state (ULS) of concrete structures. The new fibres not only improve the durability but also improve the bearing or load capacity.

TENSILE STRENGTH $R_m$

A steel fibre within the present invention, i.e. the middle portion of a steel fibre according to the present invention preferably has a high tensile strength $R_m$. The tensile strength $R_m$ is the greatest stress that the steel fibre withstands during a tensile test.

The tensile strength $R_m$ of the middle portion of the steel fibre (i.e. the maximum load capacity $F_m$ divided by the original cross-section area of the steel fibre) is above 1000 MPa, and more particularly above 1400 MPa, e.g. above 1500 MPa, e.g. above 1750 MPa, e.g. above 2000 MPa, e.g. above 2500MPa.

The high tensile strength of steel fibres within the present invention allows the steel fibres to withstand high loads.

A higher tensile strength is thus directly reflected in a lower dosage of the fibres, necessary in conventional concrete.

Because of the high ductility or high elongation of the steel fibres according to the present invention, the fibres will not break at CMOD's above 1.5 mm, above 2.5 mm or above 3.5 mm in the three point bending test according to EN 14651.

The high ductility or elongation of the steel fibre allows that cracks with wider openings may be bridged and that the post-crack strength of concrete after the occurrence of cracks, will be increased with increasing crack width. Or once the concrete is cracked, the fibre reinforced concrete shows a bending stiffening behaviour.

The steel fibre comprises a middle portion and anchorage ends for anchoring the steel fibre in the concrete or mortar. The anchorage force of the steel fibre in the concrete or mortar is preferably higher than 50 % of the maximum load capacity $F_m$ of the middle portion of the steel fibre. The anchorage force is determined by the maximum load that is reached during a pull out test. For this pull out test a steel fibre is embedded with one end in the concrete or mortar. The test is described further in more detail.

According to preferred embodiments of the inventon, the steel fibres have a higher anchorage force, for example an anchorage force higher than 60 %, higher than 70 % or higher than 80 % of the maximum load capacity $F_m$.

More preferably the anchorage force of the steel fibre in the concrete or mortar is even higher than 90 %, for example higher than 92 %, 95 %, 98 % or even higher than 99 %.

The higher degree of anchorage of the steel fibres in the concrete or mortar, the higher the residual strength of the concrete or more. The better the steel fibres are prevented from slipping out of the concrete, the better the full strength of the middle portion of the steel fibre is used.

For example in case the anchorage force of the steel fibre in the concrete or mortar is 90%; 90 % of the full strength of the middle portion of the steel fibre may be used.

The high degree of anchorage in concrete can be obtained in different ways as for example by enlarging the ends, by cold heading, by making pronounced hooks to the ends of the steel fibres, by undulating the ends or by combinations of this.
The anchorage ends are for example enlarged anchorage ends, cold headed anchorage ends, bent anchorages ends, undulated anchorage ends or any combination thereof.

The mechanism why some ends provide a better anchorage than others is not fully understood and the degree of anchorage can not be predicted by for example mathematical modelling. Therefore, according to the present invention it is proposed to determine the anchorage force of a steel fibre by embedding the steel fibre provided with one end in concrete or mortar and by subjecting the steel fibre to a pull out test (load displacement test).

The steel fibres, more particularly the middle portion of the steel fibers typically have a diameter D ranging from 0.4 mm to 1.20 mm. In case the cross-section of the steel fibre and more particularly of the middle portion of the steel fibre is not round, the diameter is equal to the diameter of a circle with the same surface area as the cross-section of the middle portion of the steel fibre.
The steel fibres; more particularly the middle portion of the steel fibers typically have a length to diameter ratio L/D ranging from 40 to 100.

The middle portion of the steel fibre can be straight or rectilinear; or can be wavy or undulated.

The concrete structure has an average post crack residual strength at ULS exceeding 3 MPa, e.g. more than 4 MPa, e.g. more than 5 MPa, 6 MPa, 7 MPa, 7.5 MPa.
The dosage of steel fibres in the concrete structure is preferably but not necessarily less than 80 kg/m$^3$, preferably less than 60 kg/m$^3$. The dosage of steel fibres in concrete may range from typically from 20 kg/m$^3$ to 50 kg/m$^3$, e.g. from 30 kg/m$^3$ to 40 kg/m$^3$.

**Brief Description of Figures in the Drawings**

The invention will be further explained in the following description by means of the accompanying drawing, wherein:

- Figure 1 illustrates a tensile test (load-strain test) of a steel fibre;
- Figure 2 illustrates a pull-out test (load-displacement test) of a steel fibre embedded in concrete or mortar;
- Figure 3 shows the load-strain curve of a prior art steel fibre and a steel fibre according to the present invention;
- Figure 4a, Figure 4b and Figure 4c are illustrations of steel fibres according to the present invention.

**Mode(s) for Carrying Out the Invention**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The following terms are provided solely to aid in the understanding of the inventions.

- Maximum load capacity ($F_m$) : the greatest load which the steel fibre withstands during a tensile test;
- Elongation a maximum load (%) : increase in the gauge length of the steel fibre at maximum force, expressed as a percentage of the original gauge length;
- Elongation at fracture (%) : increase in the gauge length at the moment of fracture expressed as a percentage of the original gauge length;
- Tensile strength ($R_m$): stress corresponding to the maximum load ($F_m$);
- Stress : force divided by the original cross-sectional area of the steel fibre;
- Dosage : quantity of fibres added to a volume of concrete (expressed in kg/m$^3$).

To illustrate the invention a number of different steel fibres, prior art steel fibres and steel fibres within the present invention are subjected to a number of different tests :

- a tensile test (load-strain test); and
- a pull-out test (load-displacement test).

The tensile test is applied on the steel fibre, more particularly on the middle portion of the steel fibre. Alternatively, the tensile test is applied on the wire used to make the steel fibre.

The tensile test is used to determine the maximum load capacity $F_m$ of the steel fibre and to determine the elongation at maximum load $A_{g+e}$.

The pull-out test is applied on the steel fibre embedded with one end in the concrete or mortar. The pull out test is used to measure the anchorage force of a steel fibre in concrete or mortar and can furthermore be used to determine the absolute displacement of the steel fibre embedded in the concrete or mortar.

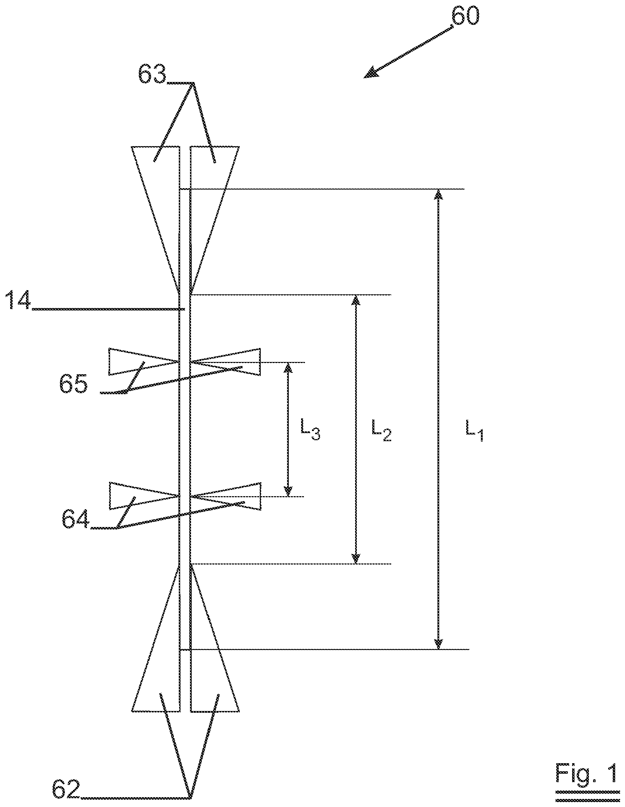

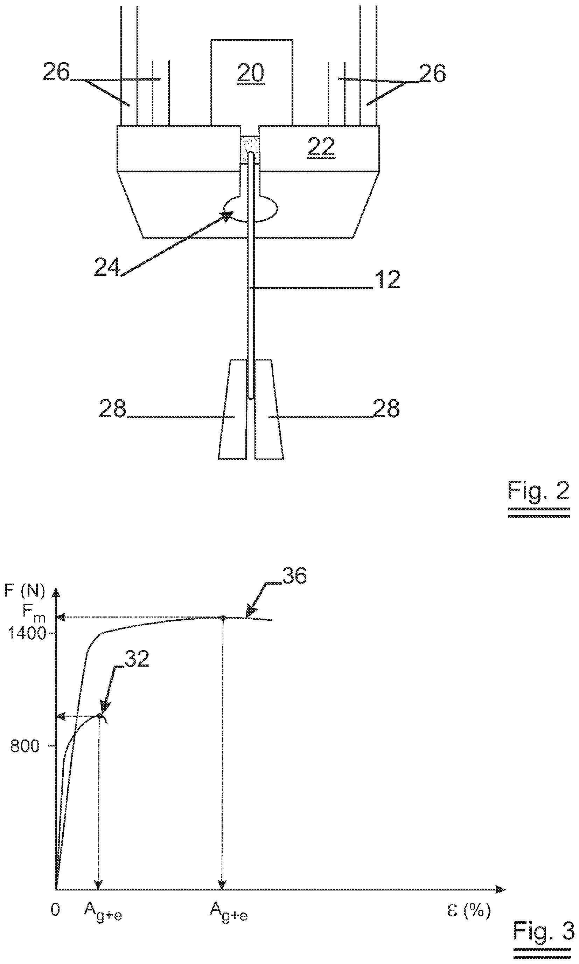

The tests are illustrated in Figure 1 and Figure 2 respectively.

Figure 1 shows a test set up 60 for measuring the elongation of steel fibres adapted for concrete reinforcement. The anchorage ends (for example the enlarged or hook shaped ends) of the steel fibre to be tested are cut first. The remaining middle portion 14 of the steel fibre is fixed between two pairs of clamps 62, 63. Through the clamps 62, 63 an increasing tensile force F is exercised on the middle portion 14 of the steel fibre. The displacement or elongation as a result of this increasing tensile force F is measured by measuring the displacement of the grips 64, 65 of the extensometer. $L_1$ is the length of the middle part of the steel fibre and is e.g. 50 mm, 60 mm or 70 mm. $L_2$ is the distance between the clamps and is e.g. 20 mm or 25 mm. $L_3$ is the extensometer gauge length and is minimum 10 mm, e.g. 12 mm, e.g. 15 mm. For an improved grip of the extensometer to the middle portion 14 of the steel fibre, the middle portion 14 of the steel fibre can be coated or can be covered with a thin tape to avoid slippery of the extensometer over the steel fibre. By this test a load-elongation curve is recorded.

The percentage total elongation at maximum load is calculated by the following formula :

$$A_{g+e} = \frac{\text{extension at maximum load}}{\text{extensometer gauge length} L_3} \times 100$$

With the help of the test set up 60, the steel fibre within the present invention has been compared with a number of commercially available prior art steel fibres as to breaking load $F_m$, tensile strength $R_m$ and total elongation at maximum load $A_{g+e}$. Five tests per specimen have been done. Table 1 summarizes the results.

**Table 1**

| Fibre type | Diameter (mm) | $F_m$ (N) | $R_m$ (MPa) | $A_{g+e}$ (%) |
|---|---|---|---|---|
| Prior art 1 | 0.90 | 879 ±8 | 1382 ±12 | 1.37 ±0.07 |
| Prior art 2 | 1.0 | 911 ±14 | 1160 ±18 | 1.86 ±0.24 |
| Prior art 3 | 1.0 | 1509 ±12 | 1922 ±15 | 2.36 ±0.19 |
| Prior art 4 | 1.0 | 873 ±10 | 1111 ±13 | 1.95 ±0.21 |
| Prior art 5 | 1.0 | 1548 ±15 | 1972 ±19 | 1.99 ±0.27 |
| Prior art 6 | 1.0 | 1548 ±45 | 1971 ±58 | 2.33 ±0.29 |
| Prior art 7 | 0.75 | 533 ±19 | 1206 ±43 | 2.20 ±0.24 |
| Prior art 8 | 0.9 | 751 ±29 | 1181 ±46 | 2.16 ±0.13 |
| Prior art 9 | 0.77 | 1051 ±20 | 2562 ±44 | 1.88 ±0.15 |
| fibre in the invention | 0.89 | 1442 ±3 | 2318 ±4 | 5.06 ±0.32 |

Only the fibre within the invention has an elongation at maximum load exceeding 4 %.

Figure 2 illustrates a test set up for measuring the anchorage of a steel fibre in concrete. A steel fibre 12 is anchored at its one end in a concrete cube 20. The cube 20 is made of a conventional concrete. The concrete cube 20 rests on a platform 22 with a central hole 24 through which the steel fibre 12 extends. The platform 22 is held by bars 26 which build a cage around the cube 20. The other end of the steel fibre 12 is cut away and is fixed in clamps 28. A displacement is exercised by clamps 28 on the steel fibre 12 until steel fibre 12 breaks or is pulled out of the cube 20. A force displacement or load displacement diagram is recorded.

Figure 3a shows a load-strain curve of the prior art steel fibre 32 and the steel fibre according to the present invention 36.

The load-strain curves are obtained by subjecting the steel fibres to a test as described in Figure 1.

The prior art steel fibre has a maximum load $F_m$ somewhat above 800 Newton. This maximum load $F_m$ is equivalent to a tensile strength $R_m$ of about 1200 MPa. The elongation at maximum load $A_{g+e}$ of the prior art steel fibre is relative low, in particular lower than 2.0 %.

When the load-strain curve 36 of a steel fibre according to the present invention is compared with the load-strain curves 32 of the prior art steel fibres two differences are to be noticed :

First of all, the maximum load $F_m$ is greater than 1400 Newton, i.e. much greater than the maximum load $F_m$ of the prior art fibre of curve 32.

Secondly, the elongation at maximum load $A_{g+e}$ is also much greater than the elongation at maximum load $A_{g+e}$ of the prior art fibre of curve 32. The elongation at maximum load $A_{g+e}$ of the steel fibre according to the present invention is greater than 2.5 %, or even greater than 3.0% or 4.0 %.

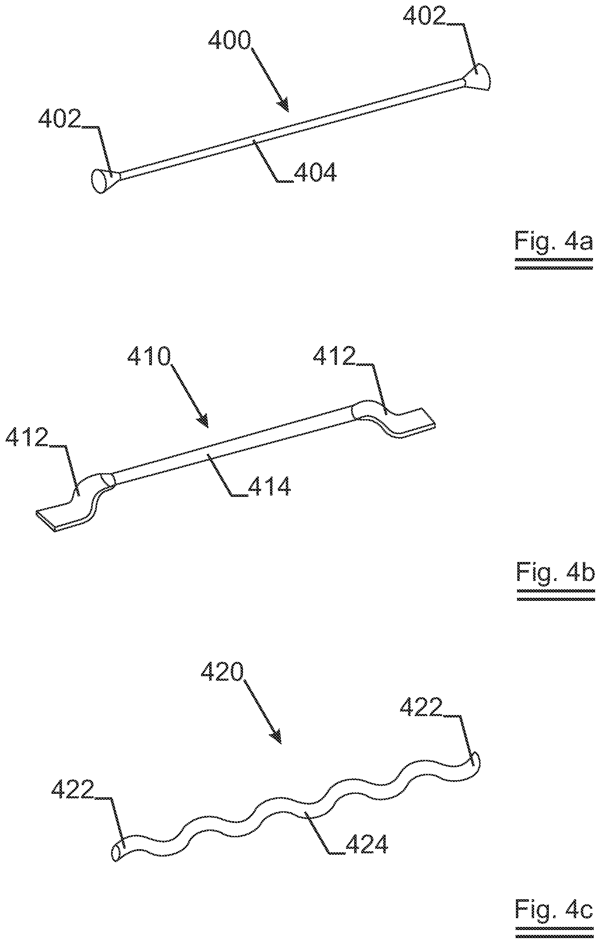

Figure 4a, Figure 4b and Figure 4c show embodiments of steel fibres within the present invention.

Figure 4a shows a steel fibre 400 having a middle portion 404 and two anchorage ends 402. The anchorage ends 402 are enlarged ends. The middle portion 404 between the two anchorage ends 402 is for example straight or rectilinear. The cross-section of the middle portion 404 is for example substantially circular or round. The diameter or thickness of the middle portion 404 preferably ranges between 0.4 to 1.2 mm. The length to diameter ratio of the middle portion 404 is, for practical and economical reasons, mostly situated between 40 and 100.

The anchorage ends 402 are enlarged ends that are substantially conically formed for improving the anchoring of the steel fibre 400 into the matrix-material of the concrete, to be reinforced.

Figure 4b shows another steel fibre 410 having a middle portion 414 and two ends 412. The middle portion 414 is straight. The cross-section of the middle portion 414 may be round or slightly flattened. The two anchorage ends 412 are enlarged ends, more particularly enlarged ends that are hooked shaped and possibly also flattened according to the cited EP-B1-851957.

Figure 4c shows a further embodiment of a steel fibre 420 within the present invention having a middle portion 424 and two anchorage ends 422. The middle portion 424 is undulated. The anchorage ends 422 are also undulated. The undulation of the middle portion 424 and of the anchorage ends 422 can be the same or different.

Steel fibres 400, 410 and 420 preferably have a tensile strength between 1000 and 3000 MPa, most preferably between 1400 MPa and 3000 MPa, e.g. between 1600 MPa and 3000 MPa.

Steel fibres within the invention may be made as follows. Starting material is a wire rod with a diameter of e.g. 5.5 mm or 6.5 mm and a steel composition having a minimum carbon content of 0.50 per cent by weight (wt %), e.g. equal to or more than 0.60 wt %, a manganese content ranging from 0.20 wt % to 0.80 wt %, a silicon content ranging from 0.10 wt % to 0.40 wt %. The sulphur content is maximum 0.04 wt % and the phosphorous content is maximum 0.04 wt %.

A typical steel composition comprises 0.725 % carbon, 0.550 % manganese, 0.250 % silicon, 0.015 % sulphur and 0.015 % phosphorus. An alternative steel composition comprises 0.825 % carbon, 0.520 % manganese, 0.230 % silicon, 0.008 % sulphur and 0.010 % phosphorus. The wire rod is cold drawn in a number of drawing steps until its final diameter ranging from 0.20 mm to 1.20 mm.

In order to give the steel fibre its high elongation at fracture and at maximum load, the thus drawn wire may be subjected to a stress-relieving treatment, e.g. by passing the wire through a high-frequency or mid-frequency induction coil of a length that is adapted to the speed of the passing wire. It has been observed that a thermal treatment at a temperature of about 300 °C for a certain period of time results in a reduction of the tensile strength of about 10% without increasing the elongation at fracture and the elongation at maximum load. By slightly increasing the temperature, however, to more than 400 °C, a further decrease of the tensile strength is observed and at the same time an increase in the elongation at fracture and an increase in the elongation at maximum load.

The wires may or may not be coated with a corrosion resistant coating such as a zinc or a zinc alloy coating, more particularly a zinc aluminium coating or a zinc aluminium magnesium coating. Prior to drawing or during drawing the wires may also be coated with a copper or copper alloy coating in order to facilitate the drawing operation.

The stress-relieved wires are then cut to the appropriate lengths of the steel fibres and the ends of the steel fibres are given the appropriate anchorage. Cutting and hook-shaping can also be done in one and the same operation step by means of appropriate rolls.

The thus obtained steel fibres may or may not be glued together according to US-A-4284667.

In addition or alternatively, the obtained steel fibres may be put in a chain package according to EP-B1-1383634 or in a belt like package such as disclosed in European patent application with application number 09150267.4 of Applicant.

**Claims**

1. A concrete structure of conventional concrete, conventional concrete being defined as concrete having a compression strength lower than 75 MPa, said concrete structure comprising steel fibres (400) having a middle portion (404) and two ends (402), said middle portion (404) of said steel fibre (400) having a diameter ranging from 0.4 mm to 1.20 mm and a length to diameter ratio L/D ranging from 40 to 100, said two ends (402) being anchorage ends for anchoring said steel fibre (400) in said concrete, said anchorage ends being selected from the group consisting of enlarged ends that are conically formed (402), cold headed ends, bent ends, undulated ends or any combination thereof, said middle portion (404) of said steel fibre (400) having a tensile strength $R_m$ being at least 1000 MPa **characterized in that** said middle portion (404) of the steel fibre (400) having an elongation at maximum load $A_{g+e}$ being at least 4 %, said elongation at maximum load $A_{g+e}$ being defined as the elongation of said middle portion of said steel fibre at the maximum load said middle portion of said steel fibre may withstand in a tensile test.

2. A concrete structure according to claim 1, wherein said middle portion (404) of said steel fibre (400) has a tensile strength $R_m$ of at least 1400 MPa.

3. A concrete structure according to claim 1 or claim 2, wherein said middle portion (404) of said steel fibre (400) has a tensile strength $R_m$ of at least 2000 MPa

4. A concrete structure according to any one of the preceding claims, wherein said middle portion (404) of said steel fibre (400) has an elongation at maximum load $A_{g+e}$ of at least 5 %.

5. A concrete structure according to any of the preceding claims, wherein said elongation at maximum load $A_{g+e}$ is measured as follows:

   - cutting said anchorage ends (402);
   - fixing the remaining middle portion (404) of the steel fibre (400) between two pairs of clamps (62, 63);
   - covering the middle portion (404) of the steel fibre (400) with a thin tape or coating the middle portion (404) of the steel fibre (400) to avoid slippery of the extensometer;
   - increasing tensile force through the clamps (62, 63);
   - measuring displacement of the grips (64, 65) of the extensometer.

6. A concrete structure according to any one of the preceding claims, wherein said steel fibre (400) has a minimum carbon content of 0.50 per cent by weight, a manganese content ranging from 0.20 weight per cent to 0.80 weight per cent, a silicon content ranging from 0.10 weight per cent to 0.40 weight per cent, a sulfur content being maximum 0.040 weight per cent and a phosphorous content being maximum 0.04 weight per cent, said steel fibre being in a stress-relieved state.

7. A concrete structure according to any one of the preceding claims, wherein said concrete structure has an average post crack residual strength at ULS exceeding 4 MPa with a dosage of said steel fibres (400) less than 40 kg/m$^3$.

**Patentansprüche**

1. Betonkonstruktion aus konventionellem Beton, wobei konventioneller Beton definiert ist als Beton mit einer Kompressionsfestigkeit von kleiner als 75 MPa, wobei die Betonkonstruktion Stahlfasern (400) umfasst, die einen mittleren Abschnitt (404) und zwei Enden (402) aufweisen, wobei der mittlere Abschnitt (404) der Stahlfaser (400) einen Durchmesser in dem Bereich von 0,4 mm bis 1,20 mm und ein Längen-DurchmesserVerhältnis L/D im Bereich von 40 bis 100 aufweist, wobei die zwei Enden (402) Verankerungsenden zum Verankern der Stahlfaser (400) im Beton sind, wobei die Verankerungsenden ausgewählt sind aus der Gruppe, bestehend aus gedehnten Enden, die kegelförmig ausgebildet sind (402), kaltfließenden, gekrümmten Enden, gewellten Enden oder einer Kombination daraus, wobei der mittlere Abschnitt (404) der Stahlfaser (400) eine Zugfestigkeit Rm von mindestens 1000 MPa aufweist, **dadurch gekennzeichnet, dass** der mittlere Abschnitt (404) der Stahlfaser (400) eine Dehnung bei maximaler Last $A_{g+e}$ aufweist, die mindestens 4% beträgt, wobei die Dehnung bei maximaler Last $A_{g+e}$ als die Dehnung des mittleren Abschnitts der Stahlfaser bei maximaler Last definiert ist, wobei der mittlere Abschnitt der Stahlfaser einem Zugfestigkeitstest standhalten kann.

2. Betonkonstruktion nach Anspruch 1, wobei der mittlere Abschnitt (404) der Stahlfaser (400) eine Zugfestigkeit Rm von mindestens 1400 MPa aufweist.

3. Betonkonstruktion nach Anspruch 1 oder Anspruch 2, wobei der mittlere Abschnitt (404) der Stahlfaser (400) eine Zugfestigkeit Rm von mindestens 2000 MPa aufweist.

**4.** Betonkonstruktion nach einem der vorhergehenden Ansprüche, wobei der mittlere Abschnitt (404) der Stahlfaser (400) eine Dehnung bei maximaler Belastung $A_{g+e}$ von mindestens 5 % besitzt.

**5.** Betonkonstruktion nach einem der vorhergehenden Ansprüche, wobei die Dehnung bei maximaler Last $A_{g+e}$ wie folgt gemessen wird:

- Schneiden der Verankerungsenden (402);
- Fixieren des verbleibenden mittleren Abschnitts (404) an der Stahlfaser (400) zwischen zwei Klemmenpaaren (62, 63);
- Abdecken des mittleren Abschnitts (404) der Stahlfaser (400) mit einem dünnen Band oder Beschichten des mittleren Abschnitts (404) der Stahlfaser (400) zum Vermeiden eines Rutschens des Dehnungsmessers;
- Erhöhen der Zugkraft durch die Klemmen (62, 63);
- Messen der Verschiebung der Griffe (64, 65) des Dehnungsmessers.

**6.** Betonkonstruktion nach einem der vorhergehenden Ansprüche, wobei die Stahlfaser (400) einen minimalen Kohlenstoffgehalt von 0,50 Gewichtsprozent, einen Mangangehalt im Bereich von 0,20 Gewichtsprozent bis 0,80 Gewichtsprozent, einen Siliciumgehalt von 0,10 Gewichtsprozent bis 0,40 Gewichtsprozent, einen Schwefelgehalt von maximal 0,040 Gewichtsprozent und einen Phosphorgehalt von maximal 0,04 Gewichtsprozent aufweist, wobei die Stahlfaser in einem spannungsfreien Zustand ist.

**7.** Betonkonstruktion nach einem der vorhergehenden Ansprüche, wobei die Betonkonstruktion eine durchschnittliche Nachriss-Restfestigkeit bei ULS von mehr als 4 MPa mit einer Dosierung der Stahlfasern (400) von weniger als 40 kg/m$^3$ aufweist.

**Revendications**

**1.** Structure en béton formée de béton conventionnel, le béton conventionnel étant défini comme un béton ayant une résistance à la compression inférieure à 75 MPa, ladite structure en béton comprenant des fibres d'acier (400) comportant une partie intermédiaire (404) et deux extrémités (402), ladite partie intermédiaire (404) de ladite fibre d'acier (400) ayant un diamètre de 0,4 mm à 1,20 mm et un rapport de la longueur contre le diamètre L/D de 40 à 100, lesdites deux extrémités (402) étant des extrémités d'ancrage servant à ancrer ladite fibre d'acier (400) dans ledit béton, lesdites extrémités d'ancrage étant sélectionnées dans le groupe constitué d'extrémités agrandies qui sont de forme conique (402), d'extrémités frappées à froid, d'extrémités courbées, d'extrémités ondulées, ou de n'importe quelle combinaison de celles-ci, ladite partie intermédiaire (404) de ladite fibre d'acier (400) ayant une résistance à la traction $R_m$ d'au moins 1 000 MPa, **caractérisée en ce que** ladite partie intermédiaire (404) de la fibre d'acier (400) a un allongement à la charge maximum $A_{g+e}$ d'au moins 4 %, ledit allongement à la charge maximum $A_{g+e}$ étant défini comme l'allongement de ladite partie intermédiaire de ladite fibre d'acier à la charge maximum à laquelle ladite partie intermédiaire de ladite fibre d'acier peut résister dans un essai de traction.

**2.** Structure en béton selon la revendication 1, dans laquelle ladite partie intermédiaire (404) de ladite fibre d'acier (400) a une résistance à la traction $R_m$ d'au moins 1 400 MPa.

**3.** Structure en béton selon la revendication 1 ou la revendication 2, dans laquelle ladite partie intermédiaire (404) de ladite fibre d'acier (400) a une résistance à la traction $R_m$ d'au moins 2 000 MPa.

**4.** Structure en béton selon l'une quelconque des revendications précédentes, dans laquelle ladite partie intermédiaire (404) de ladite fibre d'acier (400) a un allongement à la charge maximum $A_{g+e}$ d'au moins 5 %.

**5.** Structure en béton selon l'une quelconque des revendications précédentes, dans laquelle ledit allongement à la charge maximum $A_{g+e}$ est mesuré comme il est indiqué ci-dessous :

- découpage desdites extrémités d'ancrage (402) ;
- blocage de la partie intermédiaire restant (404) de la fibre d'acier (400) entre deux paires de fixations (62, 63) ;
- recouvrement de la partie intermédiaire (404) de la fibre d'acier (400) avec un ruban mince ou revêtement de la partie intermédiaire (404) de la fibre d'acier (400) pour éviter que l'extensomètre ne glisse ;
- augmentation de la force de traction appliquée par l'intermédiaire des fixations (62, 63) ;
- mesure du déplacement des pinces (64, 65) de l'extensomètre.

**6.** Structure en béton selon l'une quelconque des revendications précédentes, dans laquelle ladite fibre d'acier (400) a une teneur en carbone minimum de 0,50 % en poids, une teneur en manganèse de 0,20 % en poids à 0,80 % en poids, une teneur en silicium de 0,10 % en poids à 0,40 % en poids, une teneur en soufre de 0,040 % en poids au maximum et une teneur en phosphore de 0,04 % en poids au maximum, ladite fibre d'acier étant dans un état relaxé.

**7.** Structure en béton selon l'une quelconque des revendications précédentes, ladite structure en béton ayant une résistance résiduelle moyenne après fissuration dans l'état-limite ultime dépassant 4 Mpa avec une quantité desdites fibres d'acier (400) inférieure à 40 kg/m$^3$.

Fig. 1

Fig. 2

Fig. 3

400

402

402

404

Fig. 4a

410

412

412

414

Fig. 4b

420

422

422

424

Fig. 4c

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0851957 B1
- US 4883713 A
- EP 851957 B1
- US 4284667 A
- EP 1383634 B1
- EP 09150267 A